Europäisches Patentamt

European Patent Office

Office européen des brevets

(19)

(11) Publication number: **0 230 770 B1**

## EUROPEAN PATENT SPECIFICATION

(12)

(45) Date of publication of patent specification: **26.02.92**   (51) Int. Cl.⁵: **A01K  1/03**

(21) Application number: **86309998.2**

(22) Date of filing: **22.12.86**

(54) **A breeding cage for small animals.**

(30) Priority: **31.12.85 JP 297359/85**

(43) Date of publication of application:
**05.08.87 Bulletin  87/32**

(45) Publication of the grant of the patent:
**26.02.92 Bulletin  92/09**

(84) Designated Contracting States:
**DE FR GB**

(56) References cited:
**DE-U- 7 122 359**
**DE-U- 7 619 138**
**FR-A- 2 029 182**
**US-A- 3 658 031**

(73) Proprietor: **KABUSHIKI KAISHA HAYASHIBARA SEIBUTSU KAGAKU KEN-KYUJO**
**2-3, 1-chome, Shimoishii**
**Okayama-shi Okayama(JP)**

(72) Inventor: **Kohguchi, Michihiro**
**3, Koshindan**
**Okayama-shi Okayama(JP)**
Inventor: **Ishikawa, Tetsushi**
**695-2, Minato**
**Okayama-shi Okayama(JP)**
Inventor: **Miyake, Toshio**
**7-10-403, 1-chome, Okuda**
**Okayama-shi Okayama(JP)**

(74) Representative: **Pendlebury, Anthony et al**
**PAGE, WHITE & FARRER 54 Doughty Street**
**London WC1N 2LS(GB)**

EP 0 230 770 B1

Rank Xerox (UK) Business Services

## Description

This invention relates to a breeding cage for small animals, which cage has a trapezoidal shape which widens towards the top of the cage.

Small animals such as mice, hamsters, rats, and guinea pigs are bred on a large scale for use in the metabolic testing of pharmaceuticals or in in vivo proliferation of human cells.

To breed such animals, breeding cages of trapezoidal shape which widen towards the top of the cage have been developed. These breeding cages can be grouped into type (i) wherein a feeder is provided on the inside bottom of the breeding cage as shown in Figure 13; type (ii) wherein a relatively large feeder is wholly within the breeding cage as shown in Figure 14; or type (iii) wherein, as shown in Figure 15, a feeder is provided through the front wall of the breeding cage with the top opening of the feeder outside the breeding cage, and the lower end of the feeder inside the breeding cage.

Breeding cages of type (i), however, have the disadvantages that feed supply is troublesome, and the inside of the breeding cage may be littered because the small animal in the breeding cage is liable to spill feed.

Small animals, specifically those having cheek pouches, such as squirrels and hamsters, commonly have the undesirable behaviour of taking excessive feed and temporarily storing it in its bedding.

Breeding cages of type (ii) have the disadvantages that it provides an undesirably reduced residence space for the small animal, and that it renders automatic feeding very difficult because, when a plurality of such breeding cages are multilayered in a rack for multiple breeding, particular breeding cages must be pulled out from time to time from the rack for feeding.

Breeding cages of type (iii) have the disadvantages that the feeder prevents compact stacking of the breeding cages, and that it is not acceptable for multiple breeding because it requires a relatively large space for all the animals' activities such as movement, washing and drying.

FR-A-2029182 discloses a box for animals such as mice which has a substantially trapezoidal shape widening towards its top. Part of the box is sectioned off by a perforated plate so as to be used as a feeder and a second plate forms a roof.

US-A-3658031 discloses a tiered animal housing system comprising cubicles formed by a series of individual wall dividers. The remaining cubicle walls may be formed by wires running parallel along the length of the tier. A feeder is attached to the back wall of each cubicle by means of a hinge and may be secured thereto by a spring arrangement.

DE-U-7122359 discloses a cage having an open-topped body over which is positioned a wire roof. A feeder is formed in the wire roof. These cages may be stacked at spaced intervals above one another.

In the light of the above there is considerable demand for the development of a breeding cage which can be multilayered in a rack for multiple breeding, but no satisfactory cage has yet been devised.

The invention provides a cage for breeding small animals, comprising an open-topped body of trapezoidal shape which widens towards its top and a feeder, characterized in that the feeder is removable from the body, in that a front wall of the body has an opening in its upper part, which opening is closable by the feeder and in that the feeder is positioned so that the lower end of the feeder is in the body.

Preferred features of the invention are set out in the dependent claims.

Some embodiments of the invention will now be described, by way of example with reference to the accompanying drawings in which:-

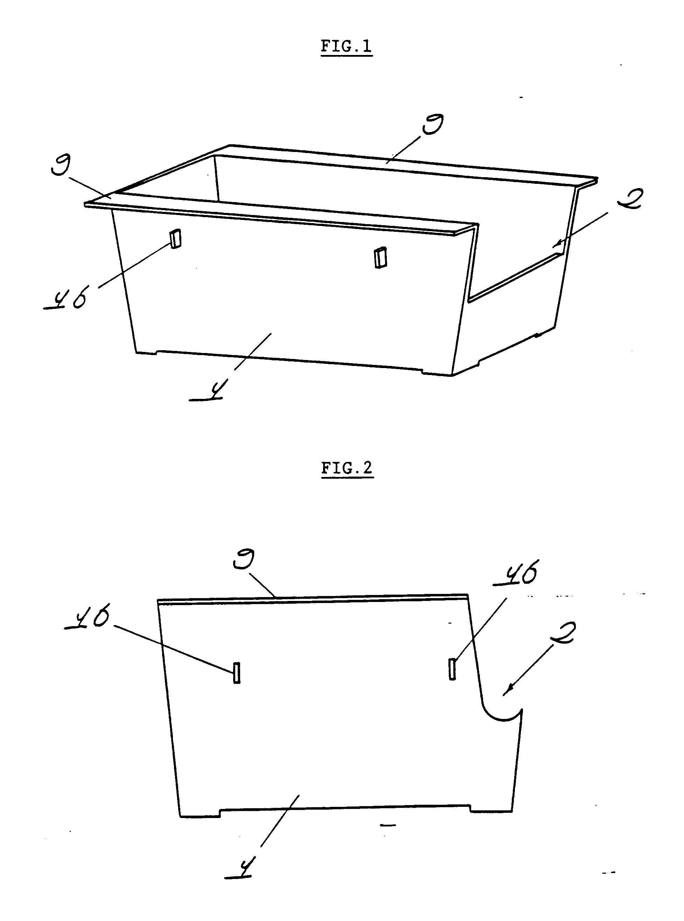

Figure 1 is a perspective view of the body of a breeding cage according to the invention,

Figure 2 is a side elevation of the body of another breeding cage according to the invention,

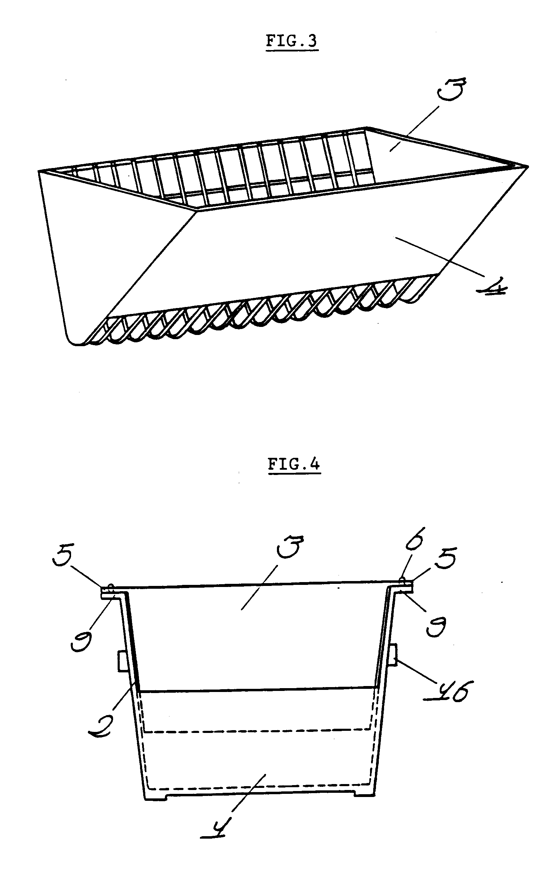

Figure 3 is a perspective view of a feeder,

Figure 4 is a front elevation of a breeding cage according to the invention,

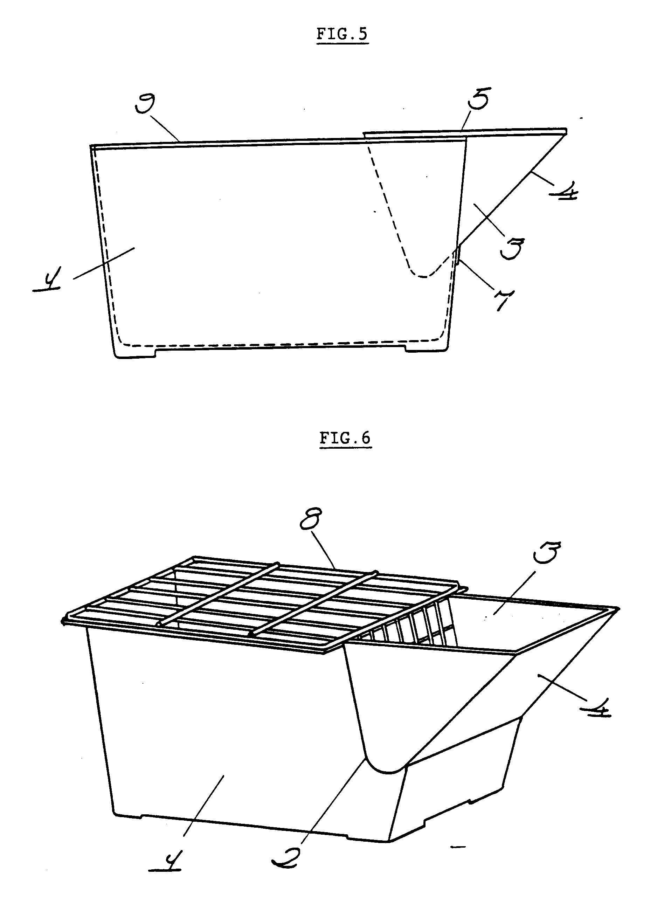

Figure 5 is a side elevation of yet another breeding cage according to the invention,

Figure 6 is a perspective view of a further breeding cage according to the invention,

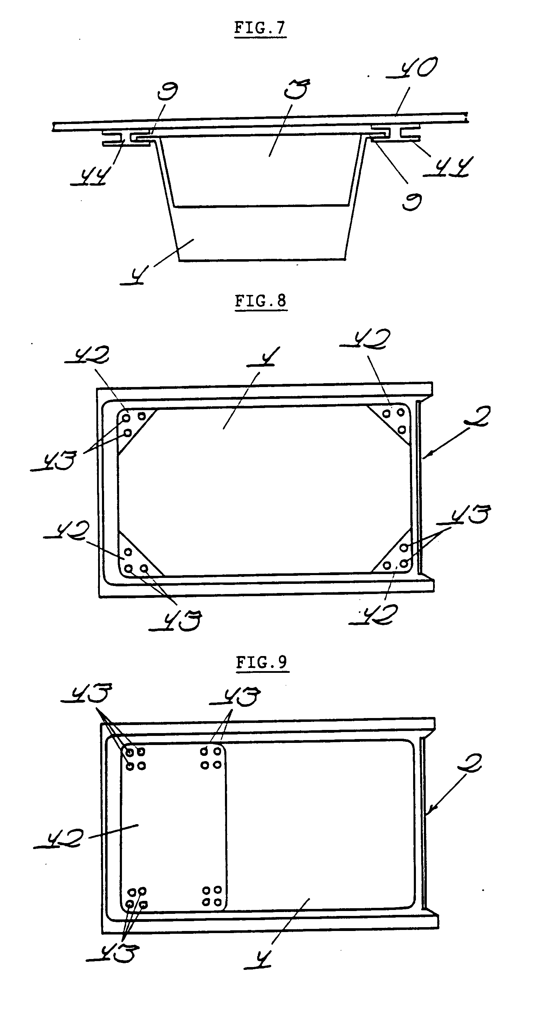

Figure 7 is a front elevation view illustrating the engagement of a breeding cage with a rack,

Figure 8 is a top plan view of the body of the breeding cage of Figure 7,

Figure 9 is a top plan view of the body of another embodiment of breeding cage,

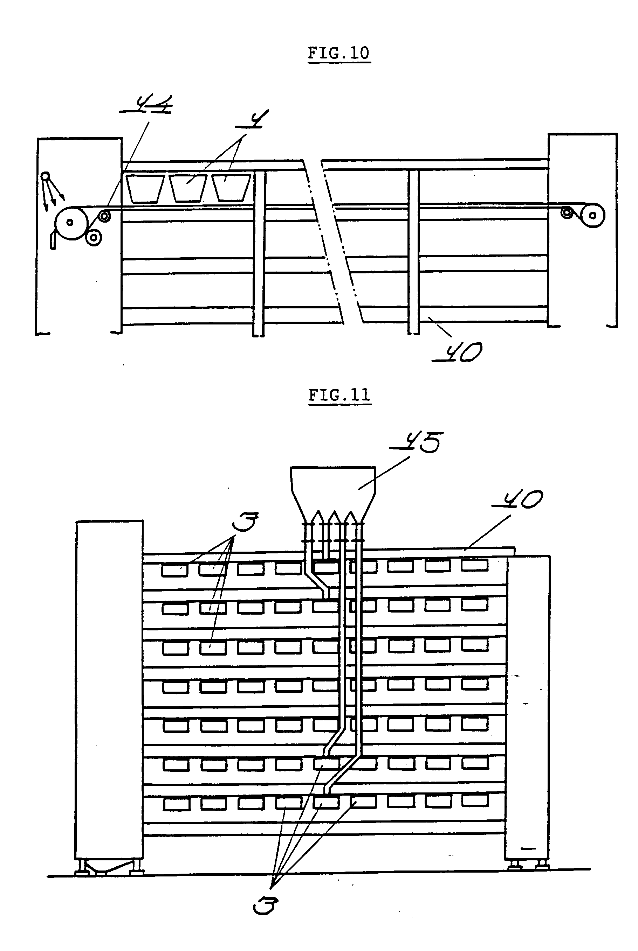

Figure 10 is a front elevation view of the principal part for the stacking of breeding cages in a rack,

Figure 11 is a front elevation view illustrative of the supply of feed to the stacked cages,

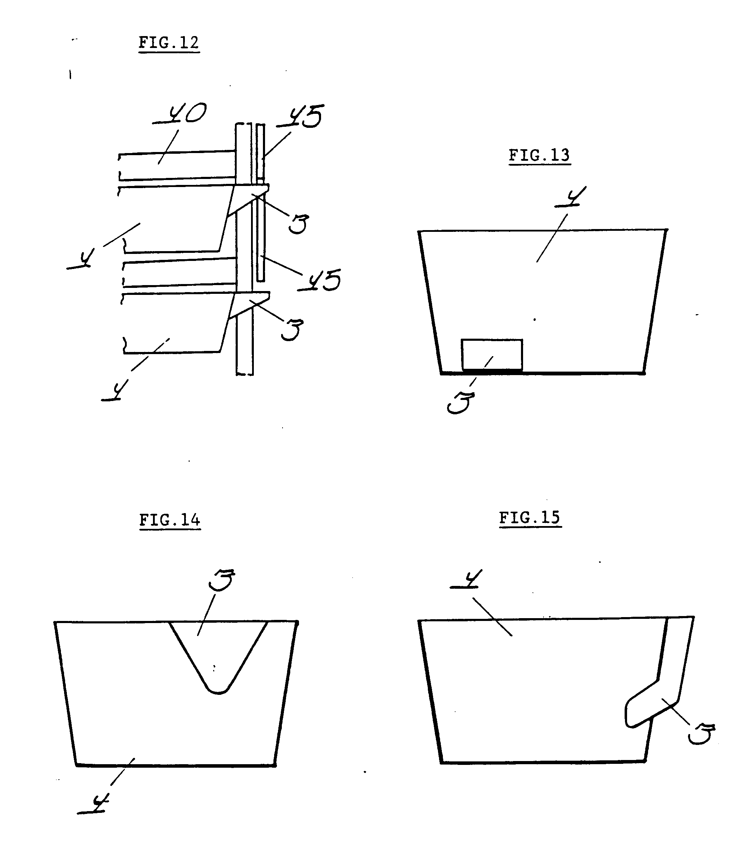

Figure 12 is another side elevation illustrating stacking breeding cages in a rack, and

Figures 13 to 15 are longitudinal sectional views of conventional breeding cages.

In the drawings the same reference numbers indicate the same or similar parts.

Figure 1 illustrates the open-topped body 1 of a breeding cage. The body 1 is a synthetic resin or metal body of trapezoidal shape that widens towards the open top. A plurality of such shaped bodies 1 can be stacked by fitting one body into the top of another body, so that the handling of the breeding cages during movement or housing is facilitated. The body 1 is preferably made of a synthetic resin, preferably a thermoplastic- or thermosetting-resin. However the body 1 can be formed from separate side and bottom walls which are assembled with an adhesive. A one-piece cage body 1 is preferred. The use of a transparent or semi-transparent synthetic resin is preferred because the small animals in the breeding cage can then be observed through the side walls. A coloured synthetic resin can be used, if necessary. When the body 1 is a metal body, the use of a metal mesh, such as steel or stainless steel mesh, is desirable.

An opening 2 is provided in the upper part of the front wall of the body 1 as shown in Figure 1. If necessary, the opening 2 may extend into the adjacent side walls as shown in Figure 2.

A feeder 3 is removably attached to the body 1 in such manner that feeder 3 closes the opening 2. As shown in Figure 3, the feeder 3 is shaped as an open-topped trough having a forwardly-inclined front wall. The cross-sectional shape of the feeder 3 is a triangle, or a circular arc, or a combination thereof which essentially provides a forwardly-inclined front wall 4 which is linear or of circular arc form. Because the open top of the body 1 opens outwardly, where the front wall 4 of the feeder is to be located, when the feeder 3 is attached to body 1 in the opening 2 at least a part or, if necessary, the entire front wall 4 of the feeder is outside body 1. Feed can then be easily supplied to feeder 3 through its open top without pulling out the body 1 from the rack. This enables automatic feeding.

Preferably the front wall 4 of the feeder and specifically that part which is outside body 1, is a solid wall so as to prevent feed from spilling out of the front wall 4. The feed supplied to feeder 3, for example in rod or cube form, can be easily taken by the small animal by forming that part of feeder 3 which is inside body 1 as a perforated structure, such as a lattice or mesh.

By positioning the lower end of the feeder 3 inside the body 1, a small animal can more easily consume the supplied feed. The feeder 3 may be made of metal, such as steel or stainless steel, to prevent the damage to feeder 3 by a small animal such as a rodent. By providing upwardly-widened opposed side walls of the feeder 3 similar to the walls of the body 1, the feeder 3 is stably attached to body 1, and handling of feeder 3 during movement or housing is facilitated because each feeder 3 can be fitted into the top of another feeder.

The means for removably attaching the feeder 3 to the opening 2 can be of any suitable form. For example, as shown in Figure 4, the feeder 3 can be removably attached to the body 1 by forming the opposed side walls of the feeder 3 with an upwardly-widening shape which fits to the inside shape of the opposed side walls of the body 1, and fitting the feeder 3 into the body 1. It is therefore desirable to provide a flange 5 at the upper edges of the opposed side walls of the feeder 3 so that feeder 3 can be engaged on the upper edges of the body 1. Also projections 6 may be provided at the upper edges of both side walls of the body 1 so that movement of the cage can be prevented by engaging either the edge of the flange 5 or by engaging projection 6 through a hole provided through the feeder 3. The feeder 3 can be stably and removably supported in body 1 by providing a stop, Figure 5, at the lower end of the front wall 4 of the feeder which locates the feeder 3 on the upper edge of the opening 2.

The feeder 3 can be removably attached together with a lid 8 to the body 1 by connecting a body lid 8 to the upper edge of the back wall of the feeder 3 as shown in Figure 6. The feeder 3 can be removably supported in the body 1 by placing the bottom of the feeder 3 on the upper edge of the opening 2 provided through the front wall and the opposed side walls of body 1, as shown in Figure 6.

The body 1 has flanges 9 which are at the upper edges of the opposed side walls of the body 1, which flanges 9 are used to support the lid 8 or the flange 5 of the feeder. Also when the body 1 is stacked in a rack 10 as shown in Figure 7, the flanges 9 which support the feeder 3 are slidably inserted along guide rails 11 provided on the rack 10. This facilitates the housing and pulling out of the body 1, and, therefore, facilitates breeding care even when the breeding cages are multilayered in a rack 10 in use.

Hollows 12 are formed at the bottom corners of the body 1 as shown in Figure 8, or encompassing two bottom corners as shown in Figure 9. Each hollow 12 may be from 1 to 25mm deep. Holes are provided through the bottoms of the hollow 12. Desirably a plurality of holes 13, of diameter 3 to 15mm, are provided. When the hollow 12 is relatively small a plurality of holes 13 are provided in the hollow. When the hollow 12 is relatively large, as in Figure 9, a plurality of holes 13 are provided through the corners of the hollow 12.

The behaviour of the small animal housed in the body 1 is such that it tends to excrete where the hollow 12 and holes 13 are at the bottom corners of the body 1, and the faeces and urine are caught by the hole 13 and then easily conveyed outside the body 1. The bedding in body 1 using chopped rice straw, sawdust or "White Flake", a bedding prepared from American fir, commercialized by Charles River Japan, Inc., Atsugi-shi, Kanagawa-ken, Japan, can then be limited or even omitted.

Furthermore, the faeces and urine from racked cage bodies 1 can be gathered automatically outside the bodies 1 by providing a belt conveyor 14 underneath the bodies 1 supported in the rack 10, as shown in Figure 10.

A feed hopper 15 is provided on rack 10 as shown in Figures 11 and 12 for supplying the feed to the feeders 3 of a plurality of bodies 1 which is housed in the rack 10. A sensor checks the fall of the feed level in each feeder 3 so that feeding is automatic.

Water supply is provided by suitably providing a water nozzle with a conventional cock or valve in feeder 3 or in the body 1 in such a manner that the small animal in the body 1 can freely receive water therefrom.

The body 1 has a number of supporting pieces which are used for stacking the breeding cages. Several supporting pieces 16 are provided on the outside of the opposed side walls of the body 1. When the bodies 1 are stacked the supporting pieces 16 restrict entry of one body 1 to a middle position of a lower body 1 and a residence space is retained for the small animal. A plurality of bodies 1 can thus be moved compactly without transferring the small animals from the bodies 1 to other breeding cages.

The breeding cages of the invention save feed, and, therefore, decrease the production cost of small animals as compared with the use of conventional breeding cages.

A breeding experiment using conventional breeding cages and breeding cages of the invention, will now be described.

Experiment 1

Breeding experiment using small animals

In order to compare the breeding cage of the invention with a conventional breeding cage, a breeding experiment was conducted using hamsters as the small animal which were housed in breeding cages multilayered in a rack.

The breeding cages of the invention were as shown in Figure 8 with hollows 12 and holes 13 provided at the bottom corners of each body, a feeder as shown in Figure 3, but without bedding. As the control, the conventional breeding cage as shown in Figure 14 was used with "White Flake" as the bedding.

Each breeding cage was about 14 cm in height and had about 450 cm$^2$ in floor area, and the feeder was about 0.9 litres in capacity. The residence space of the breeding cage of the invention was about 6.5 litres, and that of conventional cage was about 6.0 litres.

In both systems, a commercial solid feed was used, and water nozzles were provided so that the hamsters could freely drink water.

During the breeding, the hamsters were checked for reproduction and growth of their litters.

Experiment 1-(1)

Reproduction

In the reproduction experiment, 20 female adult hamsters were used, and the number of survival litters and survivability were checked until the litters were 21 days old.

One female adult hamster was housed and fed in one breeding cage in which a small amount of shredded paper was placed as the nest material.

The results were as shown in Table I.

Experiment 1-(2)

Growth of litters

This growth experiment was conducted by using 100 of 21 day old weaned hamsters which were daily weighed until they became 56 day old.

Five hamsters were housed and fed in each breeding cage.

The results were as shown in Table II.

Table I

| Breeding cage | Parturition rate | Number of survival litters (Survivability) | | |
|---|---|---|---|---|
| | | 0th day | 14th day | 21st day |
| Present invention | 95% | 196 (100%) | 159 (81%) | 157 (80%) |
| Control | 90% | 183 (100%) | 134 (73%) | 123 (67%) |

Table II

| Breeding cage | Breeding period (days) | | | | | |
|---|---|---|---|---|---|---|
| | 21 | 28 | 35 | 42 | 49 | 56 |
| Present invention | 40.5±3.0g | 72.1±5.0g | 94.2±5.4g | 109.0±6.1g | 123.7±7.3g | 136.5±8.6g |
| Control | 40.5±3.0g | 69.0±6.5g | 86.8±4.8g | 99.0±5.6g | 111.5±6.4g | 124.0±7.8g |

This data revealed that the hamsters bred in the breeding cages of the invention were superior in reproduction and growth of litters to those bred in conventional breeding cages.

As is evident from the above, by comparison with conventional breeding cages, the breeding cages of the invention are much more suitable for multiple breeding cages which are multilayered in a rack in use.

Furthermore, each breeding cage of the invention can be supplied with feed without pulling it out from the rack, and this facilitates automatic feeding.

Additionally, since the excreted faeces and urine drop outside the breeding cage of the invention, it requires no bedding, as well as facilitating automatic removal of the faeces and urine using a belt conveyor.

When the body of the cage is a unitary synthetic resin body, the simple provision of an opening for a feeder at the upper part of the front wall, or at the front and side walls, greatly decreases the production cost of a breeding cage.

The breeding cages of the invention can be moved compactly even with small animals in the cages because the breeding cages, without their feeders can be stacked on one another.

All the care of the feeders such as washing, drying, movement and storage, can be carried out within a relatively small space because the feeders can also be stacked on one another.

The breeding obtained with the breeding cage of the invention is superior to that attained with conventional breeding cages.

## Claims

1. A cage for breeding small animals, comprising an open-topped body (1) of trapezoidal shape which widens towards its top and a feeder (3), characterized in that the feeder (3) is removable from the body, in that a front wall of the body (1) has an opening (2) in its upper part, which opening (2) is closable by the feeder (3) and in that the feeder (3) is positioned so that the lower end of the feeder (3) is in the body (1).

2. A cage as claimed in Claim 1, wherein the removable feeder (3) closes both the opening (2) in the front wall of the body (1), and openings provided at the upper parts of the opposed side walls of the body.

3. A cage as claimed in Claim 1 or Claim 2, wherein the feeder (3) is in the form of an open-topped trough having a forwardly-inclined front wall (4).

4. A cage as claimed in any one of Claims 1 to 3, wherein the upper part of the front wall (4) of the feeder (3) is outside the body (1).

5. A cage as claimed in Claim 4, wherein the wall of the feeder (3) which is inside the body (1) is perforated, and the wall which is outside the body (1) is a solid wall.

6. A cage as claimed in any one of Claims 1 to 5, wherein the feeder (3) is made of metal.

7. A cage as claimed in any one of Claims 1 to 6, wherein a hollow (12) and hole (13) are provided at a bottom corner of the body (1).

8. A cage as claimed in any one of Claims 1 to 7, wherein at least one supporting piece (16) is provided on the outside of each side wall of the body (1).

9. A cage as claimed in any one of Claims 1 to 8, wherein a flange (9) is provided at the upper edge of each side wall of the body (1).

10. A cage as claimed in any one of Claims 1 to 9, wherein the body (1) is formed in one piece from a synthetic resin.

11. A plurality of breeding cages as claimed in any one of Claims 1 to 10, which are multilayered in a rack.

12. A plurality of breeding cages in a rack as claimed in Claim 11, with automatic feeding equipment (15) for supplying feed to the feeder (3) of each cage.

13. A plurality of breeding cages in a rack as claimed in Claim 11 or Claim 12, with a belt conveyor beneath a number of cages to carry away faeces and urine which falls through holes in each cage.

## Revendications

1. Cage d'élevage de petits animaux, comprenant un corps (1) ouvert au sommet de forme trapézoïdale qui s'élargit vers son sommet et une mangeoire (3), caractérisée en ce que la mangeoire (3) peut être extraite du corps, en ce qu'une paroi avant du corps (1) comporte une ouverture (2) dans sa partie supérieure, laquelle ouverture (2) peut être fermée par la mangeoire (3) et en ce que la mangeoire (3) est disposée de manière que l'extrémité inférieure de la mangeoire (3) se trouve dans le corps (1).

2. Cage selon la revendication 1, dans laquelle la mangeoire amovible (3) ferme à la fois l'ouverture (2) dans la paroi avant du corps (1), et des ouvertures ménagées dans les parties supérieures des parois latérales opposées du corps.

3. Cage selon la revendication 1 ou 2, dans laquelle la mangeoire (3) se présente sous la forme d'une auge ouverte au sommet comportant une paroi avant inclinée vers l'avant (4).

4. Cage selon l'une quelconque des revendications 1 à 3, dans laquelle la partie supérieure de la paroi avant (4) de la mangeoire (3) se trouve à l'extérieur du corps (1).

5. Cage selon la revendication 4, dans laquelle la paroi de la mangeoire (3) qui se trouve à l'intérieur du corps (1) est perforée et la paroi qui se trouve à l'extérieur du corps (1) est une paroi pleine.

6. Cage selon l'une quelconque des revendications 1 à 5, dans laquelle la mangeoire (3) est en métal.

7. Cage selon l'une quelconque des revendications 1 à 6, dans laquelle un creux (12) et un trou (13) sont ménagés en un coin inférieur du corps (1).

8. Cage selon l'une quelconque des revendications 1 à 7, dans laquelle au moins une pièce de support (16) est prévue sur l'extérieur de chaque paroi latérale du corps (1).

9. Cage selon l'une quelconque des revendications 1 à 8, dans laquelle un rebord (9) est prévu sur le bord supérieur de chaque paroi latérale du corps (1).

10. Cage selon l'une quelconque des revendications 1 à 9, dans laquelle le corps (1) est façonné d'un seul tenant en une résine synthétique.

11. Série de cages d'élevage selon l'une quelconque des revendications 1 à 10, disposées en plusieurs couches dans un râtelier.

12. Série de cages d'élevage disposées dans un râtelier selon la revendication 11, avec un matériel de distribution automatique de nourriture (15) pour distribuer de la nourriture à la mangeoire (3) de chaque cage.

13. Série de cages d'élevage disposées dans un râtelier selon la revendication 11 ou 12, avec un tapis roulent situé au-dessous d'un certain nombre de cages pour évacuer les déjections et l'urine qui tombent à travers des trous ménagés dans chaque cage.

**Patentansprüche**

1. Käfig zur Aufzucht von Kleintieren mit einem nach oben offenen trapezförmigen Kasten (1), der sich nach oben hin erweitert, und einer Fütterungseinrichtung (3), dadurch gekennzeichnet, daß die Fütterungseinrichtung (3) vom Kasten (1) abnehmbar ist, daß eine Frontwandung des Kastens (1) im oberen Bereich mit einer Öffnung (2) versehen ist, die durch die Fütterungseinrichtung (3) verschließbar ist, und daß die Fütterungseinrichtung (3) so angeordnet ist, daß der untere Endbereich der Fütterungseinrichtung (3) innerhalb des Kastens (1) liegt.

2. Käfig nach Anspruch 1, bei dem die abnehmbare Fütterungseinrichtung (3) sowohl die Öffnung (2) in der Frontwandung des Kastens (1) als auch in den oberen Bereichen von gegenüberliegenden Seitenwandungen des Kastens vorgesehene Öffnungen verschließt.

3. Käfig nach Anspruch 1 oder 2, bei dem die Fütterungseinrichtung (3) die Form eines oben offenen Troges mit einer nach vorne geneigten Frontwandung (4) aufweist.

4. Käfig nach einem der Ansprüche 1 bis 3, bei dem der obere Bereich der Frontwandung (4) der Fütterungseinrichtung (3) außerhalb des Kastens (1) liegt.

5. Käfig nach Anspruch 4, bei dem die Wandung der Fütterungseinrichtung (3), die innerhalb des Kastens (1) liegt, durchbrochen ist, und die Wandung, die außerhalb des Kasten (1) liegt, geschlossen ist.

6. Käfig nach einem der Ansprüche 1 bis 5, bei dem die Fütterungseinrichtung (3) aus Metall besteht.

7. Käfig nach einem der Ansprüche 1 bis 6, bei dem eine Vertiefung (12) und ein Loch (13) in einem Eckbereich im Boden des Kastens (1) vorgesehen sind.

8. Käfig nach einem der Ansprüche 1 bis 7, bei dem mindestens ein Stützteil (16) an der Außenseite jeder Seitenwandung des Kastens (1) vorgesehen ist.

9. Käfig nach einem der Ansprüche 1 bis 8, bei dem ein Flansch (9) am oberen Rand jeder Seitenwandung des Kastens (1) vorgesehen ist.

**10.** Käfig nach einem der Ansprüche 1 bis 9, bei dem der Kasten (1) einstückig aus Kunstharz hergestellt ist.

**11.** Mehrzahl von Aufzuchtkäfigen nach einem der Ansprüche 1 bis 10, die mehrschichtig in einem Gestell angeordnet sind.

**12.** Mehrzahl von Aufzuchtkäfigen in einem Gestell nach Anspruch 11 mit einer automatischen Fütterungsanlage (15) zur Zuführung von Futter zur Fütterungseinrichtung (3) jedes Käfigs.

**13.** Mehrzahl von Aufzuchtkäfigen in einem Gestell nach Anspruch 11 oder 12 mit einem Bandförderer unterhalb einer Anzahl von Käfigen zum Abtransport von Kot und Urin, die durch in jedem Käfig angeordnete Löcher fallen.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15